# EUROPÄISCHE PATENTANMELDUNG

(11) **EP 4 083 571 A1**
(43) Veröffentlichungstag der Anmeldung: **02.11.2022**
(21) Anmeldenummer: 21170459.8
(22) Anmeldetag: 26.04.2021
(51) Int. Cl.: G01B 21/24, F16D 1/12, G01M 1/22

(54) **VERFAHREN UND VORRICHTUNG ZUR ERKENNUNG UND SIGNALISIERUNG EINER FEHLAUSRICHTUNG EINER ERSTEN WELLE ZU EINER ZWEITEN WELLE**

(71) Anmelder: Siemens Aktiengesellschaft, 80333 München (DE)
(72) Erfinder: Bormann, Ulf, 90518 Altdorf (DE); Nolting, Christoph, 91315 Höchstadt/Aisch (DE); Scheibner, Dirk, 90473 Nürnberg (DE); Schimmer, Jürgen, 90473 Nürnberg (DE); Zettner, Jürgen, 90587 Veitsbronn (DE)

(57) **Zusammenfassung**

Die Erfindung betrifft ein Verfahren zur Erkennung und Signalisierung einer Fehlausrichtung einer ersten Welle (3) zu einer zweiten Welle (4), mit folgenden Schritten: Umwandlung von Energie, die von einer Fehlausrichtung der ersten Welle (3) zur zweiten Welle (4) herrührt, in elektrische Energie mittels eines Energiewandlers (10); Speisung einer Signaleinheit (14) mit der elektrischen Energie; Freisetzung eines Signals zur Kenntlichmachung der Fehlausrichtung mittels der Signaleinheit (14). Die Erfindung betrifft zudem eine Einheit (101) zur Erkennung und Signalisierung einer Fehlausrichtung einer ersten Welle (3) zu einer zweiten Welle (4) sowie eine Wellenkupplung (5).

## Beschreibung

Eine präzise Ausrichtung eines antreibenden Motors zur Last ist in industriellen Anlagen sehr wichtig, da bei Ausrichtfehlern Belastungen auf Lagerstellen und Wellenkupplung wirken, die zu frühzeitigem Verschleiß und Ausfällen führen.

Die Wellenkupplung dient einer Verbindung von Motor und Last.

Ausrichtfehler im Antriebsstrang haben dynamische Kräfte zur Folge. Solche Fehler sind als Kraftwirkung auf die Wellenkupplung zu erkennen.

Im Betrieb ist daher eine periodische Kontrolle der Ausrichtung von Vorteil. Dies gelingt beispielsweise mit Haarlineal und Fühlerlehre.

Jedoch ist dies mit einer Abschaltung des Systems und einem hohen Arbeitsaufwand verbunden.

Der Erfindung liegt die Aufgabe zugrunde, Ausrichtfehler sicher und ohne Aufwand zu erkennen.

Die Lösung der Aufgabe gelingt durch Anspruch 1, d.h. ein Verfahren zur Erkennung und Signalisierung einer Fehlausrichtung einer ersten Welle zu einer zweiten Welle, mit folgenden Schritten:
- Umwandlung von Energie, die von einer Fehlausrichtung der ersten Welle zur zweiten Welle herrührt, in elektrische Energie mittels eines Energiewandlers,
- Speisung einer Signaleinheit mit der elektrischen Energie,
- Freisetzung eines Signals zur Kenntlichmachung der Fehlausrichtung mittels der Signaleinheit.

Vorteilhaft ist eine Ausführungsform, wonach das Signal ein auf elektromagnetischen Wellen basierendes Signal ist.

Beispielsweise ist das Signal ein licht-emittierendes Signal. Die Signalisierung gelingt in diesem Falle vorzugsweise mittels einer LED.

Alternativ oder zusätzlich kann das Signal ein Funksignal sein. Hierzu weist die Signaleinheit vorzugsweise eine Funkschnittstelle, insbesondere eine Funkantenne, auf.

Ferner ist auch eine Signalisierung mittels NFC (Near Field Communication) möglich. Dies wird in der Figurenbeschreibung näher erläutert.

In einer vorteilhaften Ausführungsform wird die elektrische Energie in einem Energiespeicher zwischengespeichert.

Der Energiespeicher ist beispielhaft als Batterie ausgebildet.

Insbesondere für eine Funkkommunikation ist eine Speicherung von Vorteil.

Alternativ kann eine Energiespeicherung mittels eines Kondensators bzw. mehreren Kondensatoren gelingen.

Vorteilhaft ist eine Ausführungsform, wonach die Energie wenigstens teilweise mechanische Energie und/oder wenigstens teilweise thermische Energie ist.

Vorteilhaft wird zur Umwandlung mechanischer Energie in elektrische Energie ein Piezogenerator verwendet.

Der Piezogenerator weist vorteilhaft wenigstens ein Piezoelement auf, vorteilhaft eine Mehrzahl an Piezoelementen.

Ein Piezoelement ist ein Bauteil, welches basierend auf dem Piezoeffekt eine mechanische Kraft in eine elektrische Energie umwandelt. Durch eine Fehlausrichtung der beiden Wellen zueinander wirkt eine Kraft auf die Wellenkupplung. Hierzu kann, wie in der Figurenbeschreibung genauer erläutert, die Wellenkupplung einen Körper aufweisen, welcher vorteilhaft einen Piezogenerator beinhaltet.

Eine Umwandlung von thermischer Energie in elektrische Energie ist ebenso möglich. Dies gelingt vorteilhaft mittels eines Thermogenerators. Ein Thermogenerator ist ein Bauteil bzw. eine Baugruppe, die eine direkte Umwandlung von Abwärme in elektrische Energie ermöglicht. Der Thermogenerator ist von Vorteil, da er langlebig und nahezu wartungsfrei ist.

Der Thermogenerator wandelt Wärmeströme bzw. Temperaturunterschiede basierend auf dem Seebeck-Effekt direkt in elektrische Energie um. Vorteilhaft funktionieren Thermogeneratoren wie Wärmekraftmaschinen, sind aber weniger sperrig und haben keine beweglichen Teile.

Vorteilhaft ist demnach eine Ausführungsform, wonach die Energie mittels eines Piezogenerators und/oder mittels eines Thermogenerators in elektrische Energie umgewandelt wird.

Es ist sowohl möglich, einen Piezogenerator oder einen Thermogenerator einzusetzen. Zudem ist eine Kombination von Piezogenerator und Thermogenerator möglich.

Piezogenerator und Thermogenerator können in dem in der Figurenbeschreibung gezeigten Körper integriert sein.

Die Lösung der oben gestellten Aufgabe gelingt ferner durch Anspruch 8, d. h. eine Einheit zur Erkennung und Signalisierung einer Fehlausrichtung einer ersten Welle zu einer zweiten Welle, aufweisend:
- wenigstens einen Energiewandler zur Umwandlung von Energie die von einer Fehlausrichtung der ersten Welle zur zweiten Welle herrührt, in elektrische Energie,
- wenigstens eine Signaleinheit zur Freisetzung eines Signals.

Wie bereits erläutert, weist der Energiewandler in einer vorteilhaften Ausführungsform einen Thermogenerator und/oder einen Piezogenerator auf.

Vorteilhaft ist zudem eine Ausführungsform, wonach die Einheit einen Energiespeicher zur Zwischenspeicherung der elektrischen Energie aufweist.

Vorteilhaft ist ferner eine Ausführungsform, wonach die Signaleinheit eine LED (Light-Emitting Diode) aufweist.

LEDs sind von Vorteil, da diese kostengünstig sind und sehr langlebig.

Ferner arbeiten LEDs sehr zuverlässig und benötigen nur geringe elektrische Energie, um eine Lichtemission zu bewerkstelligen.

Alternativ oder zusätzlich kann die Signaleinheit auch eine Funkschnittstelle aufweisen.

Während eine LED hauptsächlich zur Signalisierung der Fehlausrichtung der beiden Wellen zueinander für ein Bedienpersonal geeignet ist, kann eine Funkschnittstelle eine Information aussenden, die von einer Empfangseinheit empfangen wird. Dies ist in der Figurenbeschreibung näher erläutert.

Alternativ oder zusätzlich kann die Signaleinheit eine NFC-Schnittstelle aufweisen.

In einer vorteilhaften Ausführungsform weist hierzu die Einheit einen NFC-Sensor auf. Dieser nutzt vorteilhaft die elektrische Energie zur Erfassung der Fehlausrichtung als Sensorwert und speichert diesen Sensorwert. Dies kann beispielsweise zyklisch, also in bestimmten Zeitabständen, erfolgen.

Die NFC-Schnittstelle wird vorteilhaft genutzt, um die Datenwerte auszulesen, die durch den Sensor erfasst und abgelegt wurden.

Über NFC kann auch der Sensor selbst zusätzlich mit Energie versorgt werden.

Wie in der Figurenbeschreibung näher erläutert, gelingt das Auslesen der Daten durch eine Empfangseinheit, die beispielsweise auf einem Mobilfunkgerät bzw. Smart Phone verfügbar ist (z.B. in Form einer App).

Die Lösung der oben gestellten Aufgabe gelingt ferner durch Anspruch 14, d. h. eine Wellenkupplung zur Kupplung einer ersten Welle und einer zweiten Welle, aufweisend eine erste Kupplungsnabe zur Verbindung mit der ersten Welle mit wenigstens einer Mitnahmeklaue, eine zweite Kupplungsnabe zur Verbindung mit der zweiten Welle mit wenigstens einer Mitnahmeklaue und wenigstens eine Einheit zur Erkennung und Signalisierung einer Fehlausrichtung der ersten Welle zu der zweiten Welle.

In einer vorteilhaften Ausführungsform weist die Wellenkupplung einen Zahnkranz auf.

Vorteilhaft ist die Einheit zur Erkennung und Signalisierung einer Fehlausrichtung der ersten Welle zu der zweiten Welle in den Zahnkranz integriert und/oder am Zahnkranz ausgebildet.

Der Zahnkranz kann als Elastomerkranz ausgebildet sein. Dies ist vorteilhaft, da dadurch Schwingungen gedämpft werden.

Durch die Erfindung können Fehlausrichtungen sicher und nur mit geringem Aufwand erkannt werden.

Im Folgenden wird die Erfindung anhand der in den Ausführungsbeispielen dargestellten Figuren näher beschrieben und erläutert.
FIG 1 und FIG 5 zeigen eine Wellenkupplung.
FIG 2, FIG 3 und FIG 4 zeigen verschiedene Ausgestaltungen eines Systems, aufweisend eine dynamoelektrische Maschine, eine Last, eine lastseitige Welle, eine maschinenseitige Welle und eine Wellenkupplung.
FIG 6 zeigt ein Verfahren.

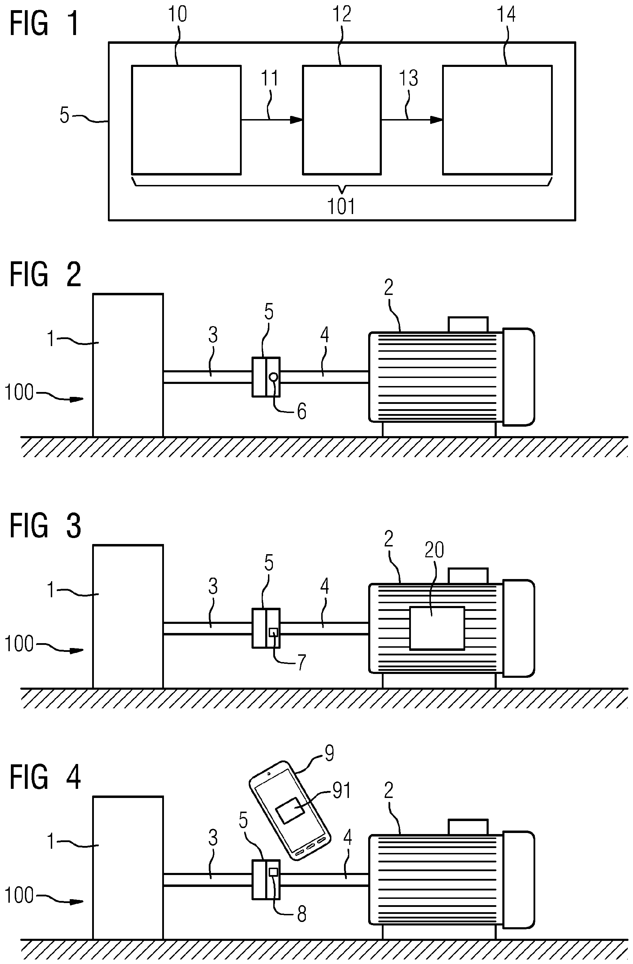

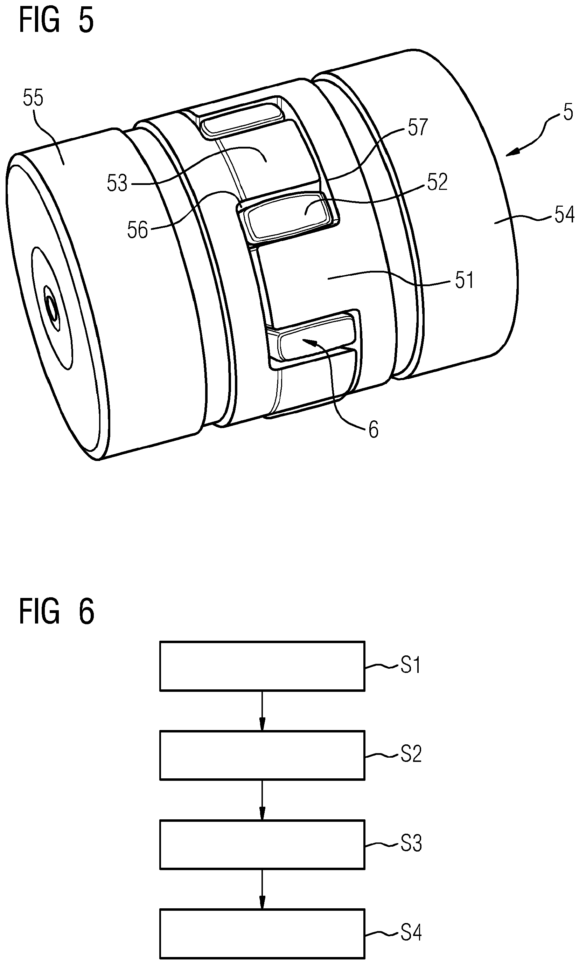

FIG 1 und FIG 5 zeigen eine Wellenkupplung 5.

FIG 1 zeigt eine Einheit 101 mit einem Energiewandler 10.

Der Energiewandler 10 kann auf verschiedene Weise ausgestaltet sein.

Der Energiewandler 10 ist vorteilhaft zur Erfassung einer Verspannung - dies äußert sich insbesondere in Form einer mechanischen Kraft - ausgebildet. Der Energiewandler 10 wandelt dies vorteilhaft in elektrische Energie.

Die folgenden beiden Ausgestaltungen sind bevorzugte Ausgestaltungen, da sie günstig sind und eine geringe Fehleranfälligkeit aufweisen. Jedoch sind auch andere denkbar.

Der Energiewandler 10 kann zur - vorteilhaft direkten - Umwandlung von Abwärme, welche durch eine Verspannung und/oder Fehlausrichtung der beiden Wellen 3 und 4 (nicht dargestellt, siehe z. B. FIG 2) hervorgerufen wird, in elektrische Energie ausgebildet sein.

Der Energiewandler 10 weist beispielsweise einen Thermogenerator auf.

Der Energiewandler 10 kann auch einen Piezogenerator aufweisen.

Auch eine Kombination von Thermogenerator und Piezogenerator ist möglich.

Der Piezogenerator weist vorteilhaft wenigstens ein Piezoelement auf, also ein Bauteil, welches den Piezoeffekt ausnutzt, um bei Einwirkung einer mechanischen Kraft eine elektrische Energie, insbesondere Spannung, zu produzieren.

Weist die Wellenkupplung ein Elastomer auf, kann auch das Elastomer der Wellenkupplung piezoelektrische Eigenschaften aufweisen und damit als Generator wirken.

Die mechanische Kraft ist hierbei eine Kraft, die bei Verspannung und/oder Fehlausrichtung der Wellen auftritt.

Zum Erzeugen höherer Ströme oder höherer Spannungen kann auch ein Piezostapel, also eine Mehrzahl an Piezoelementen vorteilhaft in einer Stapelanordnung, als Strom- oder Spannungsquelle verwendet werden.

Beim Piezostapel sind zwei oder mehr Piezoelemente elektrisch parallel oder in Reihe verbunden.

Es ist überdies möglich, dass der Energiewandler 10 einen sogenannten Thermogenerator und Piezogenerator aufweist.

Die elektrische Energie wird vorteilhaft in einem Energiespeicher 12 gespeichert, dies ist in der Figur durch einen Pfeil "Laden" 11 dargestellt.

Mit der gespeicherten Energie kann eine Signaleinheit 14 mit elektrischer Energie versorgt werden. Dies ist in der Figur durch einen Pfeil "Versorgung" 13 dargestellt.

Die Signaleinheit 14 signalisiert, dass eine Verspannung bzw. Fehlausrichtung der beiden Wellen 3 und 4 vorliegt.

Die Speicherung der elektrischen Energie mittels des Energiespeichers 12 ist optional.

Der Energiewandler 10, die Signaleinheit 14 und optional der Energiespeicher 12 bilden in der Figur die Einheit zur Erkennung und Signalisierung einer Fehlausrichtung einer ersten Welle zu einer zweiten Welle 101.

Die beschriebenen Ausgestaltungen sind vorteilhaft mit jeder der in den FIG 2, FIG 3 und FIG 4 beschriebenen Ausgestaltungen kombinierbar.

FIG 5 zeigt die Wellenkupplung 5. Die Kupplung weist einen maschinenseitigen Teil 54 und einen lastseitigen Teil 55 auf.

Der maschinenseitige Teil 54 (auch: Kupplungsnabe) weist vorteilhaft zwei oder mehr beabstandet angeordnete Klauen 51 (auch: Mitnahmeklauen) auf. Zwischen zwei Klauen ist eine Lücke 57.

Der lastseitige Teil 55 weist vorteilhaft zwei oder mehr beabstandet angeordnete Klauen 53 auf. Zwischen zwei Klauen ist eine Lücke 56.

Die Teile 54 und 55 sind in der Figur derart angeordnet, dass eine Klaue 51 in die Lücke 56 greift.

Die Teile 54 und 55 sind in der Figur derart angeordnet, dass eine Klaue 53 in die Lücke 57 greift.

Die Klauen 51 bzw. 53 weisen in der Figur eine Kontur auf, die vorteilhaft nicht passgenau in die Lücke 56 bzw. 57 greift. Es befindet sich dazwischen ein Zwischenraum (auch: Spalt, Schlitz, Fuge), in welchem ein Körper 52 angeordnet ist.

Der Zwischenraum ist nicht zwingend. Die Klauen 51 bzw. 53 können auch wenigstens im Wesentlichen passgenau in die Lücke 56 bzw. 57 greifen.

Der Körper 52 ist vorteilhaft ein Teil eines Zahnkranzes. Der Körper 52 ist beispielsweise ein Zahn eines Zahnkranzes.

Vorteilhaft ist wenigstens ein Körper 52 in der Wellenkupplung 5 enthalten.

Vorteilhaft ist pro Zwischenraum wenigstens ein Körper 52 angeordnet.

Es können jedoch auch zwei oder mehr Körper 52 in einem Zwischenraum angeordnet sein.

Der Körper 52 weist vorteilhaft die Einheit 101 auf.

Beispielsweise weist der Körper 52 einen verformbaren Teil auf. So kann der Piezoeffekt zur Gewinnung elektrischer Energie genutzt werden.

Eine weitere Funktionalität des Körpers 52 ist in der Beschreibung zu den FIG 6 und FIG 7 erläutert.

FIG 2, FIG 3 und FIG 4 zeigen verschiedene Ausgestaltungen eines Systems 100, aufweisend eine dynamoelektrische Maschine 2, eine Last 1, eine lastseitige Welle 3, eine maschinenseitige Welle 4 und eine Wellenkupplung 5.

Die Last 1 kann z. B. eine Pumpe oder ein Lüfter sein. Auch andere Arten sind möglich.

Die dynamoelektrische Maschine 2 ist vorteilhaft als dynamoelektrisch rotatorische Maschine ausgebildet.

FIG 2 zeigt, dass eine Signalisierung mittels eines lichtemittierenden Bauteils gelingt.

Die Signaleinheit 14 (siehe FIG 1) ist in dieser Ausgestaltung ein licht-emittierendes Bauteil.

Dies ist beispielsweise eine LED 6, da dafür nur wenig elektrische Energie benötigt wird.

So kann ein Benutzer die Fehlausrichtung leicht visuell erkennen, indem bei einer Fehlausrichtung die LED 6 mit Energie versorgt wird und diese dadurch leuchtet.

Die Signalisierung gelingt jedoch auch mittels Funk. In FIG 3 ist hierzu eine Funkschnittstelle 7 gezeigt.

Bevorzugt weist das System 100 hierbei eine Einheit 20 auf, die zum Empfang von Funkdaten ausgebildet ist. Dies kann beispielsweise ein Smart Sensor sein.

Ein Smart Sensor ist ein Sensor, der vorteilhaft auf Mikrotechnik, Mikrosystemtechnik und/oder Nanotechnologie basiert und vorzugsweise zur Messgrößenerfassung und/oder Signalaufbereitung und/oder Signalverarbeitung eingerichtet ist.

Der Smart Sensor weist z. B. einen Mikroprozessor oder Mikrocontroller sowie vorteilhaft wenigstens eine, vorzugsweise standardisierte, Schnittstelle zur Kommunikation mit einem übergeordneten System bereit. Der Smart Sensor ist kostengünstig, verbessert eine Flexibilität des Systems 100 und ermöglicht eine Dezentralisierung.

Die Einheit 20 ist in der Figur an der Maschine 2 angeordnet.

Der Empfang von Funkdaten kann auch mittels anderer Einheiten, die in mobilen Endgeräten, z. B. Smartphones, enthalten sind, bewerkstelligt werden.

FIG 4 zeigt eine weitere Ausgestaltung des Systems 100.

Die Wellenkupplung 5 weist in dieser Ausgestaltung einen NFC-Sensor auf.

Der NFC-Sensor nutzt vorteilhaft die elektrische Energie zur Erfassung der Fehlausrichtung als Sensorwert und speichert diesen Sensorwert. Dies kann beispielsweise zyklisch, also in bestimmten Zeitabständen, erfolgen.

Die Figur zeigt eine NFC-Schnittstelle 8. Die NFC-Schnittstelle 8 wird vorteilhaft genutzt, um die Datenwerte auszulesen, die durch den Sensor erfasst und abgelegt wurden.

Das Auslesen der Daten gelingt durch eine Empfangseinheit 91, die beispielsweise auf einem Mobilfunkgerät bzw. Smart Phone 9 verfügbar ist (z.B. in Form einer App).

Die Empfangseinheit 91 kann ein NFC-Lesegerät sein.

Das Smart Phone 9 ist vorteilhaft nicht immer in der Nähe des Systems 100. Das Smart Phone 9 wird vorzugsweise durch einen Bediener vorteilhaft in die Nähe des Systems 100 gebracht, um festzustellen, ob eine Fehlausrichtung vorliegt oder ob keine Fehlausrichtung vorliegt. Es kann also auch ein Gutzustand abgefragt werden.

"Nähe" bedeutet hierbei eine Distanz zwischen NFC-Schnittstelle 8 und Smart Phone 9, die für die Near Field Communication ausreichend ist. Diese Distanz ist vorteilhaft wenigstens 1 cm und maximal 20 cm. Besonders vorteilhaft ist eine Distanz von 5 bis 15 cm, beispielsweise 10 cm.

FIG 6 zeigt das erfindungsgemäße Verfahren zur Erkennung und Signalisierung einer Fehlausrichtung einer ersten Welle zu einer zweiten Welle.

In einem Verfahrensschritt S1 erfolgt eine Umwandlung von Energie, die von einer Fehlausrichtung der ersten Welle zur zweiten Welle herrührt, in elektrische Energie mittels des Energiewandlers.

Eine Fehlausrichtung kann beim Kuppeln der Wellen entstehen. Ferner kann eine Fehlausrichtung auch durch eine Fundamentsenkung entstehen.

Die Fehlausrichtung führt zu einer Verspannung der Wellen.

In einem optionalen Verfahrensschritt S2 erfolgt eine Zwischenspeicherung der elektrischen Energie.

In einem Verfahrensschritt S3 erfolgt eine Speisung einer Signaleinheit mit der elektrischen Energie.

In einem Verfahrensschritt S4 erfolgt eine Freisetzung eines Signals zur Kenntlichmachung der Fehlausrichtung mittels der Signaleinheit.

## Patentansprüche

1. Verfahren zur Erkennung und Signalisierung einer Fehlausrichtung einer ersten Welle (3) zu einer zweiten Welle (4), mit folgenden Schritten:
- Umwandlung von Energie, die von einer Fehlausrichtung der ersten Welle (3) zur zweiten Welle (4) herrührt, in elektrische Energie mittels eines Energiewandlers (10),
- Speisung einer Signaleinheit (14) mit der elektrischen Energie,
- Freisetzung eines Signals zur Kenntlichmachung der Fehlausrichtung mittels der Signaleinheit (14).

2. Verfahren nach Anspruch 1, wobei das Signal ein auf elektromagnetischen Wellen basierendes Signal ist.

3. Verfahren nach einem der vorhergehenden Ansprüche, wobei das Signal ein licht-emittierendes Signal ist.

4. Verfahren nach einem der vorhergehenden Ansprüche, wobei das Signal ein Funksignal ist.

5. Verfahren nach einem der vorhergehenden Ansprüche, wobei die elektrische Energie in einem Energiespeicher (12) zwischengespeichert wird.

6. Verfahren nach einem der vorhergehenden Ansprüche, wobei die Energie wenigstens teilweise mechanische Energie und/oder wenigstens teilweise thermische Energie ist.

7. Verfahren nach einem der vorhergehenden Ansprüche, wobei die Energie mittels eines Piezogenerators und/oder mittels eines Thermogenerators in elektrische Energie umgewandelt wird.

8. Einheit (101) zur Erkennung und Signalisierung einer Fehlausrichtung einer ersten Welle (3) zu einer zweiten Welle (4), aufweisend:
- wenigstens einen Energiewandler (10) zur Umwandlung von Energie, die von einer Fehlausrichtung der ersten Welle (3) zur zweiten Welle (4) herrührt, in elektrische Energie,
- wenigstens eine Signaleinheit (14) zur Freisetzung eines Signals.

9. Einheit (101) nach Anspruch 8, wobei der Energiewandler (10) einen Thermogenerator und/oder einen Piezogenerator aufweist.

10. Einheit (101) nach einem der Ansprüche 8 oder 9, wobei die Einheit einen Energiespeicher (12) zur Zwischenspeicherung der elektrischen Energie aufweist.

11. Einheit (101) nach einem der Ansprüche 8 bis 10, wobei die Signaleinheit (14) eine LED (6) aufweist.

12. Einheit (101) nach einem der Ansprüche 8 bis 11, wobei die Signaleinheit (14) eine Funkschnittstelle (7) aufweist.

13. Einheit (101) nach einem der Ansprüche 8 bis 12, wobei die Signaleinheit eine NFC-Schnittstelle (8) aufweist.

14. Wellenkupplung (5) zur Kupplung einer ersten Welle (3) und einer zweiten Welle (4), aufweisend:
- eine erste Kupplungsnabe (55) zur Verbindung mit der ersten Welle (3) mit wenigstens einer Mitnahmeklaue (53),
- eine zweite Kupplungsnabe (54) zur Verbindung mit der zweiten Welle (4) mit wenigstens einer Mitnahmeklaue (51),
- wenigstens eine Einheit (101) zur Erkennung und Signalisierung einer Fehlausrichtung der ersten Welle (3) zu der zweiten Welle (4) nach einem der Ansprüche 8 bis 13.

15. Wellenkupplung (5) nach Anspruch 14, weiter aufweisend einen Zahnkranz, wobei die Einheit zur Erkennung und Signalisierung einer Fehlausrichtung der ersten Welle (3) zu der zweiten Welle (4) in den Zahnkranz integriert und/oder am Zahnkranz ausgebildet ist.
